# DEMANDE DE BREVET EUROPEEN

(11) **EP 4 707 817 A2**
(43) Date de publication de la demande: **11.03.2026**
(21) Numéro de dépôt: 26151611.6
(22) Date de dépôt: 24.10.2019
(51) Int. Cl.: G01P 15/02

(54) **UNITÉ DE MESURE INERTIELLE À SENSIBILITÉ RÉDUITE AUX CONTRAINTES THERMOMÉCANIQUES**

(30) Priorité: 24.10.2018 FR 1859841
(62) Demande divisionnaire de: 19789727.5
(71) Demandeur: SAFRAN ELECTRONICS & DEFENSE, 75015 Paris (FR)
(72) Inventeur: CUINAT, Jérôme, 77550 MOISSY-CRAMAYEL (FR); VANDEBEUQUE, Paul, 77550 MOISSY-CRAMAYEL (FR)
(74) Mandataire: Cabinet Boettcher

(57) **Abrégé**

Unité de mesure comprenant au moins deux éléments, à savoir un bâti et un capteur inertiel, un premier des éléments étant pourvu de plots ayant une surface sur laquelle est appliquée une surface d'appui d'un deuxième des éléments sous un effort sensiblement normal auxdites surfaces qui est exercé par au moins un élément de serrage, les plots ayant des dimensions et une géométrie adaptées pour :
- autoriser une déformation des plots sous l'effet d'une contrainte thermomécanique engendrée dans une plage de température de fonctionnement de l'unité de mesure de manière à éviter un glissement desdites surfaces l'une par rapport à l'autre sous l'effet de cette contrainte,
- maintenir en position le capteur inertiel en assurant une transmission vibratoire limitée compatible avec le fonctionnement du capteur.

## Description

La présente invention concerne le domaine de la mesure et plus particulièrement le domaine de la mesure inertielle.

### Arrière-plan technologique

Une unité de mesure inertielle comprend généralement un bâti, couramment nommé bloc senseur inertiel ou BSI, sur lequel sont montés des capteurs inertiels. Les capteurs inertiels comportent habituellement trois capteurs linéaires, ou accéléromètres, et trois capteurs angulaires tels que des gyroscopes ou des gyromètres. Les capteurs inertiels sont disposés selon trois axes d'un repère de mesure de telle manière que :
- les capteurs linéaires détectent les composantes, selon chacun de ces trois axes, des mouvements subis par le bâti, et
- les capteurs angulaires détectent les rotations du bâti autour de chacun de ces trois axes.

Habituellement, les capteurs inertiels comprennent une platine ou un substrat qui porte un élément sensible. La platine est pourvue d'une semelle pour former un appui plan contre une surface correspondante du bâti et de trous s'étendant perpendiculairement à la semelle pour recevoir, avec jeu, des vis qui sont engagées dans le bâti. L'effort de serrage des vis engendre dans chacune de celles-ci une tension de sorte que chaque vis exerce sur la platine un effort normal à la semelle appliquant la semelle contre ladite surface correspondante du bâti. Ainsi, l'immobilité de la platine par rapport au bâti parallèlement à la semelle dépend de :
- de la tension dans chaque vis, et
- du coefficient de frottement entre la semelle et le bâti.

Il n'est pas rare que la platine et le bâti soient dans des matériaux différents. Ces matériaux peuvent avoir des coefficients de dilation thermique différents. Lorsque l'unité de mesure inertielle subit des variations de température, ces dernières engendrent des dilatations différentielles des différents matériaux et donc des contraintes thermomécaniques, reprises par la fixation de la platine sur le bâti, qui ont une influence sur les performances des capteurs inertiels.

Il est connu de modéliser l'influence de variations de température sur les performances de l'unité de mesure inertielle et d'en déduire des paramètres de correction ou compensation permettant de maintenir les performances de l'unité de mesure inertielle à un niveau acceptable dans la plage de températures de fonctionnement prévue pour l'utilisation future de l'unité de mesure inertielle.

Or, si les contraintes thermomécaniques sont importantes, elles risquent de provoquer un glissement de la platine par rapport au bâti : il en résulte une modification des contraintes mécaniques qui est difficilement prévisible et qui ne se répète pas de manière constante.

### Objet de l'invention

Un but de l'invention est de fournir un moyen permettant de limiter l'influence de la température sur les performances d'une unité de mesure.

### Bref exposé de l'invention

A cet effet, on prévoit, selon l'invention, une unité de mesure selon la revendication 1.

Ainsi, les contraintes thermomécaniques vont provoquer une déformation des plots sans glissement entre les surfaces en appui. Or, une telle déformation est répétable (c'est-à-dire que pour une contrainte thermomécanique donnée, on aura toujours la même déformation) et plus simple à modéliser.

D'autres caractéristiques et avantages de l'invention ressortiront à la lecture de la description qui suit de modes de réalisation particuliers non limitatifs de l'invention.

### Brève description des dessins

Il sera fait référence aux dessins annexés, parmi lesquels :

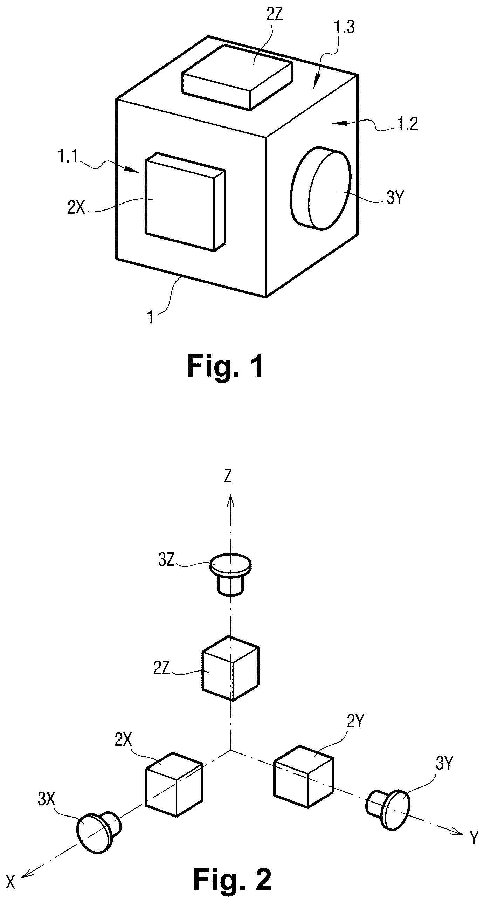

- la figure 1 est une vue schématique en perspective d'une unité de mesure inertielle selon l'invention ;
- la figure 2 est une vue schématique montrant le principe de positionnement des capteurs dans cette unité de mesure inertielle ;
- la figure 3 est une vue en perspective d'un premier mode de réalisation du bâti de cette unité de mesure inertielle ;
- la figure 4 est une vue schématique partielle de ladite unité, en coupe selon le plan IV de la figure 3 ;
- la figure 5 est une vue schématique partielle de ladite unité, en coupe selon le plan V de la figure 3 ;
- la figure 6 est une vue en perspective d'un deuxième mode de réalisation du bâti de cette unité de mesure inertielle.

### Exposé détaillé de l'invention

En référence aux figures, l'unité de mesure inertielle selon l'invention comprend plusieurs éléments, à savoir un bâti 1 et des capteurs inertiels. Les capteurs inertiels comprennent trois capteurs linéaires, généralement désignés en 2x, 2y, 2z, qui sont des accéléromètres, et trois capteurs angulaires, généralement désignés en 3x, 3y, 3z, qui sont ici des gyromètres. Les capteurs inertiels 2x, 2y, 2z, 3x, 3y, 3z sont disposés selon trois axes x, y, z d'un repère de mesure R de telle manière que :
- les capteurs linéaires 2x, 2y, 2z détectent les composantes, selon chacun de ces trois axes, des mouvements subis par le bâti 1, et
- les capteurs angulaires 3x, 3y, 3z détectent les rotations du bâti autour de chacun de ces trois axes.

Chaque capteur linéaire 2x, 2y, 2z comprend une platine 21 (ou substrat) portant un composant sensible à l'accélération 22. La platine 21 est ici en métal et plus particulièrement en acier ou en un alliage fer nickel. La platine 21 comprend une surface d'appui ou semelle 23 et est pourvue de trous 24 d'axe perpendiculaire à la semelle 23. Chaque trou est traversant pour recevoir une vis 40 de fixation de la platine 21 au bâti 1.

Chaque capteur angulaire 3x, 3y, 3z comprend une platine 31 (ou substrat) portant un composant 32 sensible à la rotation angulaire. Le composant sensible 32 comprend ici un résonateur vibrant. La platine 31 est ici en céramique. La platine 31 comprend une surface d'appui ou semelle 33 et est pourvue de trous 34 d'axe perpendiculaire à la semelle 33. Chaque trou est traversant pour recevoir une vis 40 de fixation de la platine 31 au bâti 1.

Le bâti 1 a ici sensiblement la forme d'un cube ayant six faces (dont seules sont visibles ici les faces 1.1, 1.2, 1.3) à chacune desquelles est fixé un des capteurs inertiels 2x, 2y, 2z, 3x, 3y, 3z. Le bâti 1 est ici en une pièce unique réalisée en métal et plus particulièrement en acier.

En saillie de chacune des faces du bâti 1 s'étendent des plots 10 ayant une surface terminale 11 sur laquelle est appliquée la semelle 23, 33 de la platine 21, 31 d'un des capteurs inertiels 2x, 2y, 2z, 3x, 3y, 3z. Chaque plot 10 est pourvu d'un taraudage 12 d'axe perpendiculaire à la surface terminale 11 pour recevoir la portion d'extrémité filetée d'une des vis 40.

On comprend que chacune des vis 40 constitue un élément de serrage qui est mis en tension par le couple de serrage de manière à exercer sur la platine 21, 31 un effort normal à la semelle 23, 33 appliquant la semelle 23, 33 contre la surface terminale 11 du plot 10 dans lequel elle est engagée.

Les plots 10 ont des dimensions et une géométrie adaptées pour :
- autoriser une déformation des plots 10 sous l'effet d'une contrainte thermomécanique engendrée dans une plage de température de fonctionnement de l'unité de mesure de manière à éviter un glissement des semelles 23, 33 par rapport à la surface terminale 11 sous l'effet de cette contrainte,
- maintenir en position le capteur inertiel en assurant une transmission vibratoire limitée compatible avec le fonctionnement du capteur inertiel 2x, 2y, 2z, 3x, 3y, 3z.

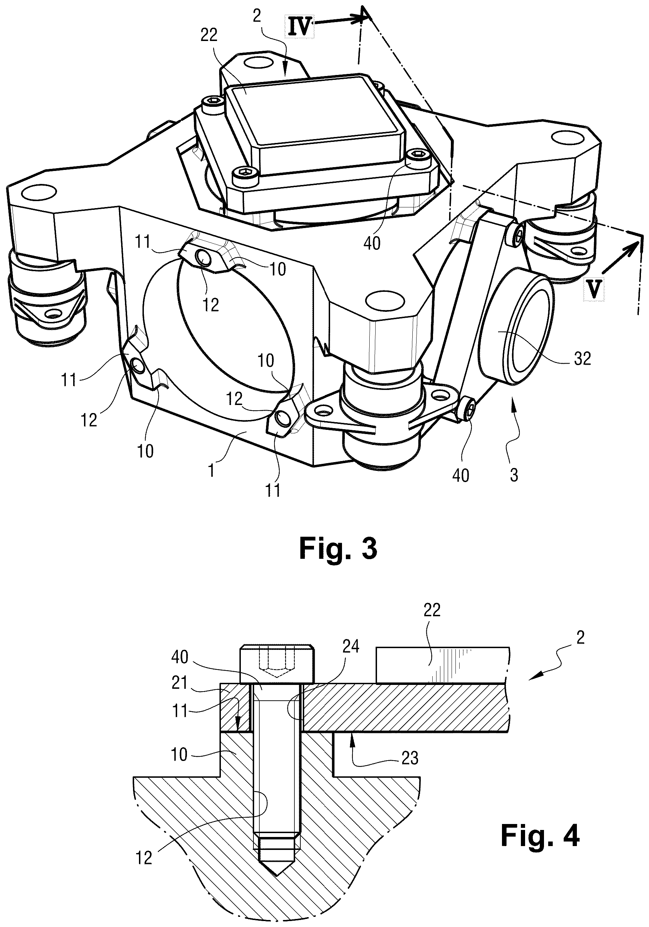

En référence plus particulièrement à la figure 3, les plots 10 de chaque face du bâti 1 ont une section transversale de forme oblongue et incurvée. L'incurvation des plots 10 est ici sensiblement centrée sur le centre géométrique de la face en question et les plots 10 sont disposés symétriquement par rapport à ce centre.

A titre d'exemple, les dimensions de chaque plot sont :
- 3 mm pour la hauteur ;
- 6 mm pour la largeur ;
- 10 mm pour la longueur.

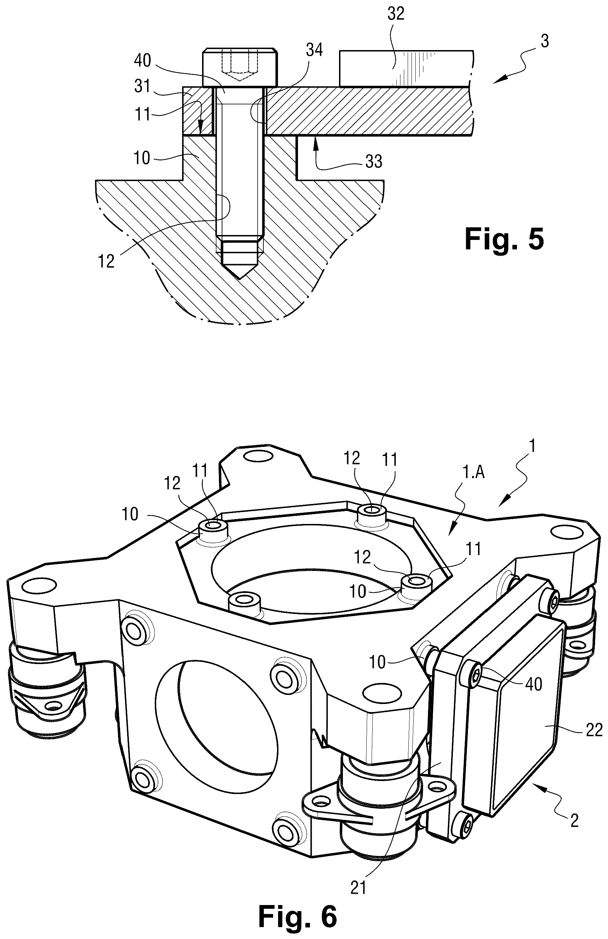

En référence plus particulièrement à la figure 6, les plots 10 ont une section transversale de forme circulaire. Les plots 10 de chaque face du bâti 1 sont disposés symétriquement par rapport à un centre de la face en question.

A titre d'exemple, les dimensions de chaque plot sont :
- 3 mm pour la hauteur ;
- 6 mm pour le diamètre.

Bien entendu l'invention n'est pas limitée aux modes de réalisation décrit mais englobe au contraire toute variante entrant dans le champ de l'invention telle que définie par les revendications.

Le nombre et le type de capteurs inertiels montés sur le bâti peuvent être différents de ceux décrits.

Les capteurs inertiels peuvent comprendre, ou pas, au moins un capteur linéaire et au moins un capteur angulaire.

Les capteurs angulaires peuvent avoir toute structure adaptée à l'application envisagée. Les capteurs angulaires peuvent comprendre un résonateur vibrant (en forme de cloche ou de poutre) ou fonctionner selon un autre principe (gyrolaser par exemple).

Les capteurs angulaires peuvent être des gyroscopes ou des gyromètres.

Les capteurs inertiels peuvent être réalisés sous une forme traditionnelle (ou macromécanique) ou sous la forme de microsystèmes électromécaniques (ou MEMS).

Le bâti 1 peut être en une ou plusieurs pièces fixées les unes aux autres par tout moyen et notamment par boulonnage, soudage... Le bâti 1 peut être dans un autre matériau que celui décrit et par exemple en aluminium.

Les plots peuvent être solidaires de la platine et non du bâti 1.

Les plots peuvent être cylindriques à section circulaire, ovale ou polygonale. Les plots peuvent avoir une section transversale constante sur toute leur hauteur ou non. Dans ce dernier cas, les plots ont par exemple un pied ayant une section supérieure à une section de leur extrémité libre.

Bien que l'invention soit particulièrement utile et efficace pour les unités de mesure inertielle, d'autres applications sont envisageables avec des unités de mesure dont les capteurs ne sont pas inertiels.

## Revendications

1. Unité de mesure comprenant un capteur inertiel et au moins deux éléments, à savoir un bâti et une platine pourvue du capteur inertiel, un premier de ces deux éléments comportant des plots ayant une surface terminale sur laquelle est appliquée une surface d'appui d'un deuxième de ces deux éléments sous un effort sensiblement normal auxdites surfaces qui est exercé par au moins un élément de serrage, les plots ayant des dimensions et une géométrie adaptées pour :
- autoriser une déformation des plots sous l'effet d'une contrainte thermomécanique engendrée dans une plage de température de fonctionnement de l'unité de mesure de manière à éviter un glissement desdites surfaces l'une par rapport à l'autre sous l'effet de cette contrainte,
- maintenir en position le capteur en assurant une transmission vibratoire limitée compatible avec le fonctionnement du capteur.

2. Unité selon la revendication 1, comprenant plusieurs capteurs inertiels montés sur le bâti.

3. Unité selon la revendication 2, dans laquelle les capteurs inertiels comprennent au moins un capteur linéaire et au moins un capteur angulaire.

4. Unité selon la revendication 3, dans laquelle le capteur angulaire comprend un résonateur vibrant.

5. Unité selon la revendication 3 ou la revendication 4, dans laquelle le capteur linéaire et le capteur angulaire sont en des matériaux différents et le bâti est en une pièce d'un matériau unique.

6. Unité selon l'une quelconque des revendications précédentes, dans laquelle les plots sont solidaires du bâti.

7. Unité selon l'une quelconque des revendications précédentes, dans laquelle les plots ont une section transversale de forme oblongue et incurvée.

8. Unité selon l'une quelconque des revendications 1 à 6, dans laquelle les plots ont une section transversale de forme circulaire.

9. Unité selon l'une quelconque des revendications précédentes, dans laquelle les plots sont dans un matériau différent du matériau constituant le deuxième élément.

10. Unité selon l'une quelconque des revendications précédentes, dans laquelle les plots sont agencés de telle manière que, pour une contrainte thermomécanique donnée, on ait toujours la même déformation.
